# EUROPÄISCHE PATENTSCHRIFT

(11) **EP 0 762 118 B1**
(45) Veröffentlichungstag und Bekanntmachung des Hinweises auf die Patenterteilung: **17.05.2006**
(21) Anmeldenummer: 96114601.6
(22) Anmeldetag: 12.09.1996
(51) Int. Cl.: G01N 30/00, B01D 15/08, G01N 30/56, G01N 30/60

(54) **Verfahren zum Herstellen einer Chromatographiesäule**
Method of manufacturing a chromatography column
Procédé de fabrication d'une colonne de chromatographie

(30) Priorität: 12.09.1995 DE 19533694
(43) Veröffentlichungstag der Anmeldung: 12.03.1997
(73) Patentinhaber: K.D. Pharma Bexbach GmbH, 66450 Bexbach (DE)
(72) Erfinder: Krumbholz,Ernst Rudolf,Dr., 57510 Holving (FR); Lembke,Peter,Dr., 66583 Spiesen-Elversberg (DE)
(74) Vertreter: Bernhardt, Winfrid

(56) Entgegenhaltungen:
- EP-A- 0 008 921
- EP-A- 0 145 578
- EP-A- 0 330 503
- EP-A- 0 515 955
- US-A- 3 487 938
- US-A- 3 966 609
- US-A- 5 169 522
- US-A- 5 486 289

## Beschreibung

Die Erfindung geht aus von einer Chromatographiesäule, bestehend aus einem Kolbenzylinder,
- der in dem einen Zylinderraum die Packung der Chromatographiesäule enthält und in dem anderen, von der Kolbenstange oder einer flexiblen Leitung durchsetzten Zylinderraum mit einem Druckmedium gefüllt ist,
- in dem die Zuleitung für den Eluenten durch die Kolbenstange oder die flexible Leitung und durch den Kolben hindurch geführt ist und die Ableitung für das Eluat durch die betreffende Zylinderstimwand hindurch geführt ist oder umgekehrt
- und in dem der mit dem Druckmedium gefüllte Zylinderraum an eine Druckquelle solcher Stärke angeschlossen ist, dass das Druckmedium auf den Kolben eine Kraft ausübt, mit der dieser, ggf. unter Vorschub, die Packung zusammenhält.

Eine solche Chromatographiesäule ist aus der EP-A-0 008 921 und der US-A-5,169,522 bekannt.

Nach herkömmlicher Bauart bestehen vergleichbare Chromatographiesäulen aus einem Hohlzylinder aus Stahl mit dreibeinigem Untergestell, der oben durch eine fest angesetzte, mit einer Zuleitung bzw. Ableitung versehene Stirnwand geschlossen ist und unten einen beweglichen Boden aufweist, der mittels eines gesonderten Hydraulikzylinders gegen die in den Zylinder eingebrachte Packung gepresst werden kann. Durch die Einspeisung des Eluenten in den Zylinder mit z.B. 70 bar entsteht eine Kraft auf die Packung von bis zu mehreren Tonnen. Diese muß von dem Hydraulikzylinder noch übertroffen werden, um die Packung zusammenzudrücken.

Demgegenüber hat die eingangs genannte Konstruktion den Vorteil, dass hier alle Kräfte innerhalb des Kolbenzylinders ausgeglichen werden und nicht über das erwähnte Untergestell. Es sind grundsätzlich höhere Durchmesser und Drücke möglich.

In den beiden genannten Dokumenten steht dieser Vorteil indessen nicht in Betracht.

In der ersteren Schrift sind Zylinder aus Glas oder Kunststoff erwähnt. In der zweiten Schrift stehen Ausführungsformen von Chromatographiesäulen mit gesondertem Hydraulikzylinder, die den Vorteil nicht aufweisen, mit gattungsgemäßen Ausführungsformen unterschiedslos und ohne Erwähnung von Drücken nebeneinander.

Aus der US-PS 5,169,522 ist eine Chromatographiesäule in Form eines, für Drücke bis zu 140 bar vorgesehenen, Kolbenzylinders bekannt. Diese Form ist vorgeschlagen, um zur Herstellung der Packung eine deren Material enthaltende Suspension durch Vorschub des Kolbens zu entwässern; das Wasser wird durch eine vor die Zylinderstirnwand gelegte Fritte und durch, später verschlossene, Bohrungen in der Zylinderstimwand hindurch ausgedrückt. Die Druckmittelzuleitung wird dann verschlossen, so dass der hydraulische Druck auf den Kolben für den Gebrauch der Chromatographiesäule, jedenfalls zunächst, erhalten bleibt. Anschluss an eine Druckquelle besteht aber dann nicht. Die Zuleitung des Eluenten geschieht durch ein gewendeltes, elastisches Stahlrohr hindurch, das einerseits an einer Bohrung der betreffenden Zylinderstimwand und andererseits an einer Bohrung des Kolbens angesetzt ist. Die Ableitung geht durch eine Bohrung in der anderen Zylinderstimwand.
Die Packung kann mit dieser Vorrichtung schnell und in gleichmäßiger Schüttung hergestellt werden. Der Kolbenzylinder wird dafür, den Zylinderraum für die Packung nach oben gekehrt, in eine Halterung eingesetzt und die Suspension wird bei abgeschraubter Zylinderstimwand eingefüllt. Ein kleiner Rest des Zylinderraumvolumens wird frei gelassen, dann wird die Zylinderstirnwand aufgeschraubt. Durch mehrmaliges Umdrehen des Kolbenzylinders wird die Suspension gemischt und vergleichmäßigt, wobei die in dem Zylinderraum belassene Restluftmenge immer wieder als Blase aufsteigt und zur Durchmischung beiträgt. Nach genügender Durchmischung wird, wie bereits erwähnt, die Suspension durch Vorschub des Kolbens entwässert und die feste Packung erzeugt.
Bei großen und schweren, fest installierten Chromatographiesäulen ist diese Handhabung nicht möglich.

Der Erfindung liegt die Aufgabe zugrunde, eine Chromatographiesäule herzustellen, die bei großem Durchmesser für höhere Drücke als sie bisher möglich sind besonders geeignet ist.

Gemäß der Erfindung wird dieser Zweck erfüllt, indem der Kolbenzylinder einer Chromatographiesäule der eingangs genannten Art in einer Größe von mindestens 200 mm Innendurchmesser und mindestens 300 mm Länge aus einem hydraulischen Druckspeicher hergestellt wird durch Umgestaltung des Kolbens, und oder der Stirnwand des die Packung enthaltenden Zylinderraumes und/oder der, hohlen, Kolbenstange.
Damit kann auf bewährte und zugelassene Konstruktionen und auf eingespielte Fertigungen zurückgegriffen werden. Man braucht die Teile nur zu verchromen, zu vernickeln o. dgl. oder lässt sie aus Edelstahl herstellen.
Es sind Drücke möglich bis zu 320 bar und mehr bei z.B. 800 mm Durchmesser oder mehr.

In den meisten Fällen wird der Durchmesser der Chromatographiesäule über 500 mm und die Länge 1000 bis 2000 mm betragen.
Die Packung wird vorzugsweise trocken eingefüllt.

Alternativ besteht die solchermaßen hergestellte Chromatographiesäule, umgekehrt zu der eingangs genannten Anordnung, aus einem Kolbenzylinder,
- der in dem einen, von der Kolbenstange oder einer flexiblen Leitung durchsetzten Zylinderraum die Packung der Chromatographiesäule enthält und in dem anderen Zylinderraum mit einem Druckmedium gefüllt ist,
- in dem die Zuleitung für den Eluenten durch die Kolbenstange oder die flexible Leitung hindurch geführt ist und die Ableitung für das Eluat durch die betreffende Zylinderstimwand hindurch geführt ist oder umgekehrt
- und in dem der mit dem Druckmedium gefüllte Zylinderraum an eine Druckquelle solcher Stärke angeschlossen ist, dass das Druckmedium auf den Kolben eine Kraft ausübt, mit der dieser, ggf. unter Vorschub, die Packung zusammenhält.

Vorzugsweise wird in dem Kolben ein Kanalsystem ausgebildet
als Verzweigung für den Eluenten, die an der der Packung zugekehrten Kolbenfläche auf diese verteilte Ausmündungen aufweist,
bzw. - bei umgekehrter Wahl der Durchströmungsrichtung - als eine, von an der der Packung zugekehrten Kolbenfläche auf diese verteilten Einmündungen ausgehende, Zusammenführung für das Eluat.
Für diese Ausgestaltung wird man den Kolben des Druckspeichers ersetzen durch einen eigens hergestellten Kolben, in dem das Kanalsystem unmittelbar gebohrt und ggf. gefräst wird.

Entsprechend soll in der genannten Stirnwand des Kolbenzylinders ein Kanalsystem ausgebildet werden
als eine von an der der Packung zugekehrten Stimwandfläche auf diese verteilten Einmündungen ausgehende Zusammenführung für das Eluat
bzw. als eine Verzweigung für den Eluenten, die an der der Packung zugekehrten Stimwandfläche auf diese verteilte Ausmündungen aufweist.

Diese Ausgestaltung kann man der Stirnwand des Druckspeichers durch eine auf diese aufgesetzte Scheibe geben, in der man das Kanalsystem gebohrt und ggf. gefräst hat.

Die Kolbenstange des Druckspeichers kann und wird man verkürzen. Eine gewisse Mindesthöhe wird die Packung nicht unterschreiten. Diese Höhe fällt als Länge der Kolbenstange fort.

Die von dem Druckspeicher her vorhandene, von der Kolbenstange durchsetzte Stirnwand des Kolbenzylinders kann unverändert übernommen werden, d.h. mit einer mit der Kolbenstange koaxialen Bohrung, zu der an einem aus dem Zylinder herausragenden Abschnitt dieser Stirnwand vom Umfang her eine Radialbohrung führt. Die beiden Bohrungen, die bei dem Druckspeicher dem Druckmittelanschluss dienen, können nach der ersten Variante der Erfindung gleichfalls für den Anschluss des Druckmediums benutzt werden und nach der zweiten Variante als Zu- oder Ableitung für das Eluat.

Die erste Variante ist zweckmäßiger, die zweite ist aber ebenfalls möglich, und zwar einschließlich der Ausbildung eines Verteilers für den Eluenten bzw. einer Zusammenführung für das Eluat an der von der Kolbenstange durchsetzten Stirnwand. Auch an dem Kolben wird bei der zweiten Variante vorzugsweise der Verteiler bzw. die Zusammenführung ausgebildet, wobei die Strömung in dem Kolben umkehrt. Vorteil der zweiten Variante ist, dass ohne weitere Vorkehrungen der Eluent selbst als das Druckmedium und die Einspeisungspumpe der Chromatographiesäule als die Druckquelle benutzt werden kann und sich dabei der für das Zusammenhalten der Packung gewünschte Überdruck auf der der Kolbenstange abgewandten Kolbenseite wegen der Querschnittsverminderung durch die Kolbenstange auf der anderen Seite von selbst ergibt.

Bei der ersten Variante kann aber in verhältnismäßig einfacher Weise ein von dem Druck der Einspeisungspumpe unabhängiger, größerer Druck durch Anwendung einer Pumpe eingebracht werden, die auf Druckerzeugung und nicht auf Fördern ausgelegt ist.

Es kann aber auch hier der Eluent als Druckmedium und die Einspeisungspumpe als Druckquelle verwendet werden, wenn man den Kolben als Stufenkolben gestaltet oder die Einspeisung in die Chromatographiesäule über ein in Strömungsrichtung hinter einer Abzweigung nach dem betreffenden Zylinderraum angeordnetes Druckminderventil vornimmt.

Der Stufenkolben würde verlangen, den Zylinder in einem oberen Abschnitt noch etwas weiter auszudrehen.

Weitere Maßnahmen, die zur vorteilhaften Ausgestaltung der Erfindung dienen können, sind in der folgenden Beschreibung eines Ausführungsbeispieles angeführt.

Die Zeichnungen geben das Ausführungsbeispiel wieder.

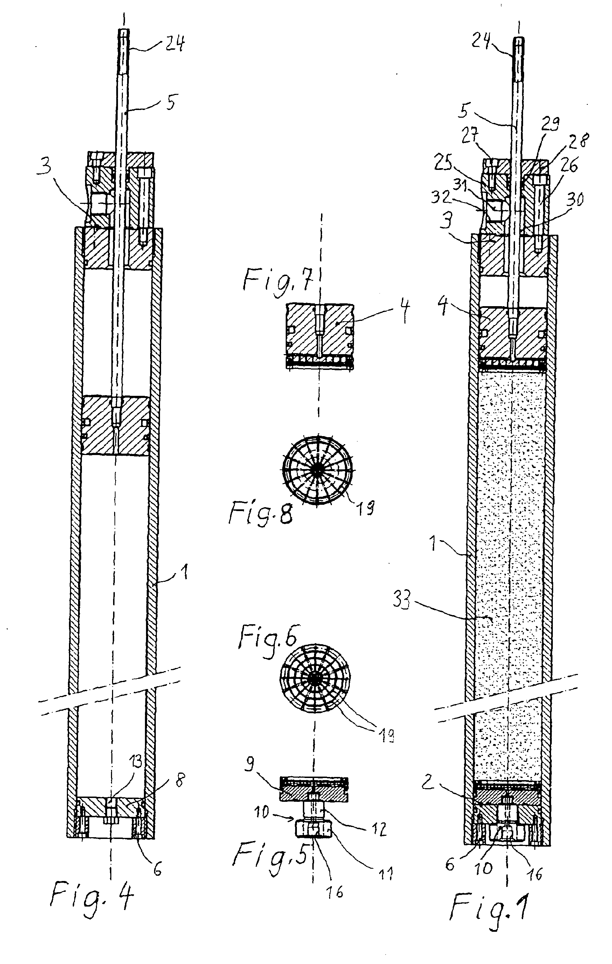

- Fig. 1: zeigt eine Chromatographiesäule im Längsschnitt,
- Fig. 2: zeigt einen unteren Abschnitt von Fig. 1, ergänzt, in größerem Maßstab,

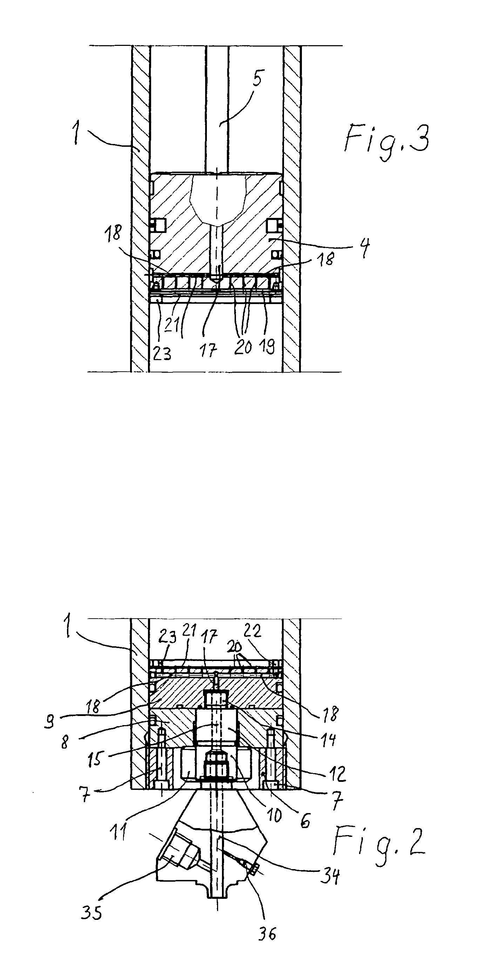

- Fig. 3: zeigt einen Ausschnitt aus Fig. 1 in größerem Maßstab,
- Fig. 4: zeigt einen hydraulischen Druckspeicher, aus dem die Chromatographiesäule durch Umbau hergestellt worden ist und
- Fig. 5 bis 8: zeigen zwei Einzelteile in entsprechendem Schnitt bzw. in Ansicht, die bei dem Umbau ersetzt bzw. hinzugefügt worden sind.

Ein Hohlzylinder 1 aus verchromtem, vemickeltem o. dgl. Stahl oder Edelstahl ist unten durch eine Stirnwand 2 und oben durch eine Stirnwand 3 abgeschlossen. Er ist mit einem Kolben 4 versehen, dessen Kolbenstange 5 durch die Stirnwand 3 ragt

Die untere Stirnwand 2 ist mittels eines Schraubringes 6 befestigt, der in ein an der Zylinderwand eingeschnittenes Gewinde greift. Sie besteht aus einem mit Schrauben 7 an dem Schraubring 6 befestigten Basisteil 8 und einer auf dieses aufgesetzten Scheibe 9. Die Scheibe 9 ist durch einen Schraubbolzen 10 an dem Basisteil 8 gehalten. Dieser liegt mit einem Kopf 11 von außen an dem Basisteil 8 an, durchsetzt es mit einem Schaft 12 in einer zu diesem Zweck gegenüber der Bohrung 13 in Fig. 4 erweiterten Bohrung und fasst mit einem Gewindestutzen 14 in die Scheibe 9.
Der Gewindestutzen 14 bildet mit einer axialen Bohrung 15 und einem Innengewinde 16 für den Anschluss einer Leitung eine Ableitung aus dem bzw. Zuleitung in den Hohlzylinder.

In Fortsetzung der Bohrung 15 weist die Scheibe 9 eine Axialbohrung 17 auf (Fig. 2). Mit dieser sind, an ihren äußeren Enden wieder verschlossene, Radialbohrungen 18 verbunden, die von der Oberfläche der Scheibe 9 her aus kreisförmigen Nuten 19 heraus jeweils mehrfach achsparallel angebohrt sind. Die betreffenden Bohrungen sind mit 20 bezeichnet. Auf der Scheibe 9 sind ein Filterpapier und ein Lochblech 21 mit einem bei 22 angeschraubten Ring 23 gehalten.

Die gleichen Gestaltungen und Anordnungen 17 bis 23 finden sich umgekehrt in dem Kolben 4 wieder. Sie haben dort dieselben Bezugszeichen. Die Axialbohrung 17 ist in dem Kolben 4 die Fortsetzung der, in den Kolben 4 eingeschraubten, hohlen Kolbenstange 5. Die Kolbenstange 5 ist an ihrem anderen Ende mit einem Außengewinde 24 für den Anschluss einer Leitung versehen.

Die Stirnwand 3 ist in ein in dem Hohlzylinder eingeschnittenes Gewinde eingeschraubt und mit einem Aufsatz 25 versehen. Der Aufsatz 25 ist mit mehreren langen Schrauben 26 angeschraubt. Ein noch einmal an ihm mit Schrauben 27 befestigter Deckel 28 stellt das Druckteil einer die Kolbenstange 5 in dem Aufsatz 25 abdichtenden Stopfbüchse 29 dar.

Im übrigen sind die zahlreichen Dichtungen nicht im einzelnen erwähnt. Sie sind in der Zeichnung als in Nuten angeordnete Dichtringe zu erkennen.
Die Stirnwand 3 einschließlich Aufsatz 25 weist eine, in dem Aufsatz 25 endende, mit der Kolbenstange 5 koaxiale Bohrung 30 auf. In diese mündet eine vom Umfang des Aufsatzes 25 ausgehende Radialbohrung 31. Die Radialbohrung 31 ist mit einem Gewinde 32 für den Anschluss einer Leitung versehen.

Zwischen der Stirnwand 2 und dem Kolben 4 ist der Hohlzylinder 1 mit der Packung 33 der Chromatographiesäule gefüllt.

Auf diese wird der Kolben 4 durch eine an der Radialbohrung 31 eingebrachte Druckflüssigkeit gepresst. Für alle Fälle ist die Druckflüssigkeit der Eluent selbst oder eine andere mit aus dem Eluenten zu gewinnenden Produkten verträgliche Flüssigkeit, beispielsweise im Falle der Gewinnung von Fischölen vorzugsweise ein Fischöl oder ein Pflanzenöl, vorzugsweise Sonnenblumenöl.
Grundsätzlich könnte das Druckmedium aber auch ein Gas oder ein überkritisches Gas sein.

Der Eluent wird durch die Kolbenstange 5 und den Kolben 4 in die Packung 33 eingeleitet und das Eluat wird durch die Stirnwand 2 abgeleitet oder umgekehrt. An die nach Fig. 2 für die Ableitung angeschlossenen Leitung 34 sind ein Anschluss 35 für ein Druckmessgerät und ein Probeentnahmeventil 36 angeschlossen.

Die Chromatographiesäule kann für jegliche Art der präparativen oder analytischen Chromatographie eingesetzt werden.

## Patentansprüche

1. Verfahren zum Herstellen einer Chromatographiesäule bestehend aus einem Kolbenzylinder,
- der in dem einen Zylinderraum die Packung (33) der Chromatographiesäule enthält und in dem anderen, von der Kolbenstange (5) oder einer flexiblen Leitung durchsetzten Zylinderraum mit einem Druckmedium gefüllt ist,
- in dem die Zuleitung (17) für den Eluenten durch die Kolbenstange (5) oder die flexible Leitung und durch den Kolben (4) hindurch geführt ist und die Ableitung (17) für das Eluat durch die betreffende Zylinderstimwand (2) hindurch geführt ist oder umgekehrt
- und in dem der mit dem Druckmedium gefüllte Zylinderraum an eine Druckquelle solcher Stärke angeschlossen ist, dass das Druckmedium auf den Kolben (4) eine Kraft ausübt, mit der dieser, ggf. unter Vorschub, die Packung (33) zusammenhält,
**dadurch gekennzeichnet,**
**dass** der Kolbenzylinder in einer Größe von mindestens 200 mm Innendurchmesser und mindestens 300 mm Länge aus einem hydraulischen Druckspeicher hergestellt wird durch Umgestaltung des Kolbens (4) und/oder der Stirnwand (2) des die Packung (33) enthaltenden Zylinderraumes und/oder der hohlen Kolbenstange (5).

2. Verfahren zum Herstellen einer Chromatographiesäule bestehend aus einem Kolbenzylinder,
- der in dem einen, von der Kolbenstange oder einer flexiblen Leitung durchsetzten Zylinderraum die Packung der Chromatographiesäule enthält und in dem anderen Zylinderraum mit einem Druckmedium gefüllt ist,
- in dem die Zuleitung für den Eluenten durch die Kolbenstange oder die flexible Leitung hindurch geführt ist und die Ableitung für das Eluat durch die betreffende Zylinderstimwand hindurch geführt ist oder umgekehrt,
- und in dem der mit dem Druckmedium gefüllte Zylinderraum an eine Druckquelle solcher Stärke angeschlossen ist, dass das Druckmedium auf den Kolben eine Kraft ausübt, mit der dieser, ggf. unter Vorschub, die Packung zusammenhält,
**dadurch gekennzeichnet,**
**dass** der Kolbenzylinder in einer Größe von mindestens 200 mm Innendurchmesser und mindestens 300 mm Länge aus einem hydraulischen Druckspeicher hergestellt wird durch Umgestaltung des Kolbens (4) und/oder der Stirnwand (2) des die Packung (33) enthaltenden Zylinderraumes und/oder der, hohlen, Kolbenstange (5).

3. Verfahren nach Anspruch 1 oder 2,
**dadurch gekennzeichnet,**
**dass** in dem Kolben (4) ein Kanalsystem (17-20) ausgebildet wird
als eine Verzweigung für den Eluenten, die an der der Packung (33) zugekehrten Kolbenfläche auf diese verteilte Ausmündungen (20,19) aufweist,
bzw. als eine, von an der der Packung (33) zugekehrten Kolbenfläche auf diese verteilten Einmündungen (19,20) ausgehende, Zusammenführung für das Eluat.

4. Verfahren nach Anspruch 3,
**dadurch gekennzeichnet,**
**dass** der Kolben des Druckspeichers ersetzt wird durch einen neu hergestellten Kolben (4), in dem das Kanalsystem (17-20) unmittelbar gebohrt und ggf. gefräst wird.

5. Verfahren nach einem der Ansprüche 1 bis 4,
**dadurch gekennzeichnet,**
**dass** in der genannten Stirnwand (2) ein Kanalsystem (17-20) ausgebildet wird
als eine, von an der der Packung (33) zugekehrten Stimwandfläche auf diese verteilten Einmündungen (19,20) ausgehende, Zusammenführung für das Eluat
bzw. als eine Verzweigung für den Eluenten, die an der der Packung (33) zugekehrten Stimwandfläche auf diese verteilte Ausmündungen (20,19) aufweist.

6. Verfahren nach einem Ansprüche 3 bis 5,
**dadurch gekennzeichnet,**
**dass** zur Bildung des Kanalsystems (17-20) mit einer Axialbohrung (17) stemförmig Radialbohrungen (18) verbunden werden, die an ihren äußeren Enden wieder verschlossen werden und von der genannten Kolbenfläche bzw. Stirnwandfläche her, vorzugsweise aus kreisförmigen Nuten (19) heraus, jeweils mehrfach achsparallel angebohrt (20) werden.

7. Verfahren nach einem der Ansprüche 1 bis 6,
**dadurch gekennzeichnet,**
**dass** der Anschluss (30,31) des mit dem Druckmedium gefüllten Zylinderraumes an die Druckquelle (Anspruch 1) bzw. die Zu- oder Ableitung für das Eluat (Anspruch 2) axial, vorzugsweise koaxial (30) mit der Kolbenstange (5), in der betreffenden Zylinderstirnwand (3) und weiter durch eine radiale Bohrung (31) geführt werden.

8. Verfahren nach Anspruch 5,
**dadurch gekennzeichnet,**
**dass** an der Stirnwand (2) des die Packung (33) enthaltenden Zylinderraumes auf die Stirnwand (8) des Druckspeichers eine Scheibe (9) aufgesetzt wird, in der das Kanalsystem (17-20) gebohrt und ggf. gefräst worden ist.

9. Verfahren nach Anspruch 8,
**dadurch gekennzeichnet,**
**dass** die Stirnwand (8) des Druckspeichers weiter aufgebohrt (13) wird und mit einem Schraubbolzen (10) durchsetzt wird, der in die genannte Scheibe (9) eingeschraubt (14) wird, mit einer axialen Bohrung (15) die Ableitung bzw. Zuleitung bildet und an seinem äußeren Ende mit einem Innengewinde (16) für den Anschluss einer Leitung (34) versehen worden ist.

10. Verfahren nach einem der Ansprüche 1 bis 9,
**dadurch gekennzeichnet,**
**dass** die Kolbenstange (5) des Druckspeichers verkürzt wird.

11. Verfahren nach einem der Ansprüche 1 bis 10,
**dadurch gekennzeichnet,**
**dass** als das Druckmedium der Eluent oder eine andere mit aus dem Eluenten zu gewinnenden Produkten verträgliche Flüssigkeit vorgesehen ist, im Falle der Gewinnung von Fischölen vorzugsweise ein Fischöl oder ein Pflanzenöl.

12. Verfahren nach einem der Ansprüche 1 bis 11,
**dadurch gekennzeichnet,**
**dass** als die Druckquelle eine Pumpe vorgesehen ist.

13. Verfahren nach einem der Ansprüche 2 bis 11,
**dadurch gekennzeichnet,**
**dass** als das Druckmedium der Eluent und als die Druckquelle die Einspeisungspumpe der Chromatographiesäule vorgesehen sind.

14. Verfahren nach Anspruch 1 oder einem der Ansprüche 3 bis 10,
**dadurch gekennzeichnet,**
**dass** als das Druckmedium der Eluent und als die Druckquelle die Einspeisungspumpe der Chromatographiesäule vorgesehen sind und der Kolben als Stufenkolben gestaltet wird oder der Eluent über ein in Strömungsrichtung hinter einer Abzweigung nach dem betreffenden Zylinderraum angeordnetes Druckminderventil in die Chromatographiesäule einzuführen vorgesehen ist.

## Claims

1. Method of producing a chromatography column comprising a piston cylinder
- which in the one cylinder space contains the packing (33) of the chromatography column and in the other cylinder space through which the piston rod (5) or a flexible line passes is filled with a pressure medium,
- in which the feed line (17) for the eluent is passed through the piston rod (5) or the flexible line and through the piston (4) and the discharge line (17) for the eluate is passed through the respective end face (2) of the cylinder or vice versa
and in which the cylinder space filled with the pressure medium is connected to a pressure source of such power that the pressure medium exerts a force an the piston (4) so that the piston (4), if the occasion arises with forward movement, holds together the packing (33), **characterized in that**
the piston cylinder is produced in a size of at least 200 mm internal diameter and at least 300 mm length from a hydraulic pressure reservoir by modification of the piston (4) and/or the end face (2) of the cylinder space containing the packing (33) and/or the hollow piston rod (5).

2. Method of producing a chromatography column comprising a piston cylinder which in the one cylinder space through which the piston rod or a flexible line passes contains the packing of the chromatography column and in the other cylinder space is filled with a pressure medium,
in which the feed line for the eluent is passed through the piston rod or the flexible line and the discharge line for the eluate is passed through the respective end face of the cylinder or vice versa
and in which the cylinder space filled with the pressure medium is connected to a pressure source of such power that the pressure medium exerts a force an the piston so that the piston, if the occasion arises with forward movement, holds together the packing, **characterized in that**
the piston cylinder is produced in a size of at least 200 mm internal diameter and at least 300 mm length from a hydraulic pressure reservoir by modification of the piston (4) and/or the end face (2) of the cylinder space containing the packing (33) and/or the hollow piston rod (5).

3. Method according to Claim 1 or 2, **characterized in that** a channel system (17-20) is formed in the piston (4) as a branching for the eluent which has outlet openings (20, 19) distributed over the piston face facing the packing (33) or as a confluence for the eluate going out from inlet openings (19, 20) distributed over the piston face facing the packing (33), respectively.

4. Method according to Claim 3, **characterized in that** the piston of the pressure reservoir is replaced by a freshly produced piston (4) in which the channel system (17-20) is directly drilled and, if appropriate, milled.

5. Method according to any of Claims 1 to 4, **characterized in that** a channel system (17-20) is formed in the abovementioned end face (2) as a confluence for the eluate going out from inlet openings (19, 20) distributed over the end face area facing the packing (33) or as a branching for the eluent which has oulet openings (20, 19) distributed over the end face area facing the packing (33).

6. Method according to any of Claims 3 to 5, **characterized in that**, to form the channel system (17-20), radial drilled holes (18) are connected in a star shape to an axial drilled hole (17) and are closed again at their outer ends and are drilled from the abovementioned piston face or end face area, respectively, preferably from circular grooves (19), in each case multiply parallel to the axis.

7. Method according to any of Claims 1 to 6, **characterized in that** the connection (30, 31) of the cylinder space filled with the pressure medium to the pressure source (Claim 1) or the feed line or discharge line for the eluate (Claim 2) is passed axially, preferably coaxially (30) with the piston rod (5), in the respective end face (3) of the cylinder and further through a radial drilled hole (31).

8. Method according to Claim 5, **characterized in that** a disc (9) in which the channel system (17-20) has been drilled and, if appropriate, milled is placed on the end face (8) of the pressure reservoir at the end face (2) of the cylinder space containing the packing (33).

9. Method according to Claim 8, **characterized in that** the end face (8) of the pressure reservoir is drilled out further (13) and fitted with a threaded bolt (10) which is screwed (14) into the abovementioned disc (9) and by means of an axial drilled hole (15) forms the discharge line or feed line and at its outer end has been provided with an internal thread (16) for connection of a line (34).

10. Method according to any of Claims 1 to 9, **characterized in that** the piston rod (5) of the pressure reservoir is shortened.

11. Method according to any of Claims 1 to 10, **characterized in that** the pressure medium provided is the eluent or another liquid which is compatible with products to be isolated from the eluent, in the case of the recovery of fish oils preferably a fish oil or a vegetable oil.

12. Method according to any of Claims 1 to 11, **characterized in that** a pump is provided as the pressure source.

13. Method according to any of Claims 2 to 11, **characterized in that** the eluent is provided as the pressure medium and the feed pump of the chromatography column is provided as the pressure source.

14. Method according to Claim 1 or any of Claims 3 to 10, **characterized in that** the eluent is provided as the pressure medium and the feed pump of the chromatography column is provided as the pressure source and the piston is configured as a step piston or the eluent is provided to be introduced into the chromatography column via a pressure-reducing valve located downstream of a branch to the respective cylinder space.

## Revendications

1. Procédé de fabrication d'une colonne de chromatographie,
constituée par un cylindre à piston,
- qui contient dans un espace cylindrique la garniture (33) de la colonne de chromatographie et qui, dans l'autre espace cylindrique traversé par la tige de piston (5) ou par une conduite flexible, est rempli d'un fluide sous pression,
- dans lequel la conduite d'amenée (17) pour l'éluant est passée à travers la tige de piston (5) ou la conduite flexible et à travers le piston (4), et la conduite d'évacuation (17) pour l'éluat est passée à travers la paroi frontale cylindrique (2) concernée ou inversement,
- et dans lequel l'espace cylindrique rempli de fluide sous pression est raccordé à une source de pression de puissance telle que le fluide sous pression exerce sur le piston (4) une force par laquelle celui-ci, le cas échéant sous avancement, maintient cohérente la garniture (33),
**caractérisé en ce que**
le cylindre de piston est fabriqué à partir d'un accumulateur de pression hydraulique, dans une taille d'au moins 200 mm de diamètre intérieur et d'au moins 300 mm de longueur en transformant le piston (4) et/ou la paroi frontale (2) de l'espace cylindrique contenant la garniture (33) et/ou de la tige de piston (5) creuse.

2. Procédé de fabrication d'une colonne de chromatographie, constituée par un cylindre à piston,
- qui contient, dans un espace cylindrique traversé par la tige de piston
ou par une conduite flexible, la garniture de la colonne de chromatographie et qui, dans l'autre espace cylindrique, est rempli d'un fluide sous pression,
- dans lequel la conduite d'amenée pour l'éluant est passée à travers la tige de piston ou la conduite flexible et la conduite d'évacuation pour l'éluat est passée à travers la paroi frontale cylindrique concernée ou inversement,
- et dans lequel l'espace cylindrique rempli de fluide sous pression est raccordé à une source de pression de puissance telle que le fluide sous pression exerce sur le piston (4) une force par laquelle celui-ci, le cas échéant sous avancement, maintient cohérente la garniture (33),
**caractérisé en ce que**
le cylindre de piston est fabriqué à partir d'un accumulateur de pression hydraulique, dans une taille d'au moins 200 mm de diamètre intérieur et d'au moins 300 mm de longueur en transformant le piston (4) et/ou la paroi frontale (2) de l'espace cylindrique contenant la garniture (33) et/ou de la tige de piston (5) creuse.

3. Procédé selon la revendication 1 ou 2,
**caractérisé en ce que**
dans le piston (4), un système de canaux (17-20) est réalisé
à titre de bifurcation pour l'éluant, laquelle présente sur la surface de piston tournée vers la garniture (33) des bouches de sortie (20, 19) réparties sur ladite surface,
ou à titre de réunion pour l'éluat, partant depuis des embouchures (19, 20) réparties sur la surface de piston tournée vers la garniture (33).

4. Procédé selon la revendication 3,
**caractérisé en ce que**
le piston de l'accumulateur de pression est remplacé par un piston (4) de fabrication nouvelle, dans lequel le système de canaux (17-20) est directement percé et, le cas échéant, fraisé.

5. Procédé selon l'une des revendications 1 à 4,
**caractérisé en ce que**
dans ladite paroi frontale (2), un système de canaux (17-20) est réalisé à titre de réunion pour l'éluat, partant depuis des embouchures (19, 20) réparties sur la surface de piston tournée vers la garniture (33),
ou à titre de bifurcation pour l'éluant, laquelle présente sur la surface de piston tournée vers la garniture (33) des bouches de sortie (20, 19) réparties sur ladite surface.

6. Procédé selon l'une des revendications 3 à 5,
**caractérisé en ce que**
des perçages radiaux (18) sont reliés en forme d'étoile avec un perçage axial (17) pour former le système de canaux (17-20), lesquels sont de nouveau fermés à leurs extrémités extérieures et sont percés (20) chacun à plusieurs reprises parallèlement à l'axe, depuis ladite surface de piston ou ladite surface de face frontale, de préférence à partir de gorges (19) circulaires.

7. Procédé selon l'une des revendications 1 à 6,
**caractérisé en ce que**
le raccordement (30, 31) de l'espace cylindrique rempli de fluide sous pression à la source de pression (revendication 1) ou la conduite d'amenée ou d'évacuation pour l'éluat (revendication 2) est mené axialement, de préférence coaxialement (30) avec la tige de piston (5) dans la paroi cylindrique (3) concernée et plus loin à travers un perçage radial (31).

8. Procédé selon la revendication 5,
**caractérisé en ce que**
sur la paroi frontale (2) de l'espace cylindrique contenant la garniture (33), une plaque (9) est placée sur la paroi frontale (8) de l'accumulateur de pression, plaque dans laquelle est percé, et le cas échéant, fraisé le système de canaux (17-20).

9. Procédé selon la revendication 8,
**caractérisé en ce que**
le perçage (13) de la paroi frontale (8) de l'accumulateur de pression est élargi et est traversé par un boulon fileté (10) qui est vissé (14) dans ladite plaque (9), qui forme avec un perçage axial (15) la conduite d'évacuation ou la conduite d'amenée et qui a été pourvu à son extrémité extérieure d'un taraudage (16) pour le raccordement d'une conduite (34).

10. Procédé selon l'une des revendications 1 à 9,
**caractérisé en ce que**
la tige de piston (5) de l'accumulateur de pression est raccourcie.

11. Procédé selon l'une des revendications 1 à 10,
**caractérisé en ce que**
il est prévu à titre de fluide sous pression l'éluant ou un autre liquide compatible avec des produits à préparer à partir de l'éluant, dans le cas de préparation d'huiles de poisson, de préférence une huile de poisson ou une huile végétale.

12. Procédé selon l'une des revendications 1 à 11,
**caractérisé en ce que**
il est prévu une pompe à titre de source de pression.

13. Procédé selon l'une des revendications 2 à 11,
**caractérisé en ce que**
l'éluant est prévu à titre de fluide sous pression et la pompe d'alimentation de la colonne de chromatographie est prévue à titre de source de pression.

14. Procédé selon la revendication 1 et l'une des revendications 3 à 10,
**caractérisé en ce que**
l'éluant est prévu à titre de fluide sous pression et la pompe d'alimentation de la colonne de chromatographie est prévue à titre de source de pression, et **en ce que** le piston est réalisé sous forme de piston à gradins ou l'introduction de l'éluant dans la colonne de chromatographie est prévue via une vanne de détente agencée en aval d'une branchement conduisant à l'espace cylindrique concerné.
